Europäisches Patentamt

European Patent Office

Office européen des brevets

(19)

(11) Veröffentlichungsnummer: **0 044 523**
**B1**

(12) EUROPÄISCHE PATENTSCHRIFT

(45) Veröffentlichungstag der Patentschrift:
24.10.84

(21) Anmeldenummer: 81105569.8

(22) Anmeldetag: 15.07.81

(51) Int. Cl.³: **B 60 T 17/18**

(54) Ausfallsicheres Bremsgestänge für ein Fahrzeug mit hydraulischem oder pneumatischem Drucksystem.

(30) Priorität: 18.07.80 US 170264

(43) Veröffentlichungstag der Anmeldung:
27.01.82 Patentblatt 82/4

(45) Bekanntmachung des Hinweises auf die Patenterteilung:
24.10.84 Patentblatt 84/43

(84) Benannte Vertragsstaaten:
AT DE FR GB

(56) Entgegenhaltungen:
FR - A - 1 254 933
US - A - 3 114 440
US - A - 3 635 317

(73) Patentinhaber: DEERE & COMPANY, 1 John Deere Road, Moline Illinois 61265 (US)

(72) Erfinder: Coleman, David LeRoy, 2030 Lombard Street, Dubuque, Iowa 52001 (US)

(74) Vertreter: Gramm, Werner, Prof. Dipl.-Ing., Patentanwälte Gramm + Lins Theodor-Heuss-Strasse 2, D-3300 Braunschweig (DE)

## Beschreibung

Die Erfindung betrifft ein Bremsgestänge für ein Fahrzeug mit hydraulischem oder pneumatischem Drucksystem, bei dem ein unter Betriebsdruck stehender Kolben einen Mitnehmer gegen die Wirkung einer Feder in einer die Bremse nicht beaufschlagenden Freigabestellung hält, während bei Druckabfall im Drucksystem der Kolben unter Wirkung der genannten Feder verschoben und der Mitnehmer dadurch in eine die Bremse beaufschlagende Bremsstellung bewegt werden, wobei der Mitnehmer nur in seiner Bremsverstellrichtung mit dem Bremsgestänge in Eingriff steht, es in seine Bremsstellung verschwenkt und hier blockiert, während der Mitnehmer in seiner Freigabestellung mit dem Bremsgestänge ausser Eingriff steht, so dass das Bremsgestänge bei normalem Druck im Drucksystem nur von der Betriebsbremsbetätigung verschwenkt werden kann.

Eine derartige Ausführungsform lässt sich der FR-A-1 254 933 entnehmen. Der Mitnehmer besteht aus einem mit der Kolbenstange verbundenen Bügel, der mit einer Buchse auf einer zum Bremsgestänge gehörenden Stange zwischen zwei mit der Stange verbundenen Anschlägen längsverschiebbar gelagert ist. Diese Stange ist an dem einen Arm eines zweiarmigen Hebels angelenkt, an dessen anderem Arm eine Stange der Betriebsbremsbetätigung angreift. Der zweiarmige Hebel ist drehfest verbunden mit einem zweiten zweiarmigen Hebel, an dem das Bremsgestänge angreift. Die den Kolben bei Druckabfall im Drucksystem verschiebende Feder ist als Druckfeder ausgebildet und unmittelbar in dem den Kolben aufnehmenden Zylindergehäuse angeordnet.

Der Erfindung liegt die Aufgabe zugrunde, das eingangs beschriebene Bremsgestänge so zu modifizieren, dass es sich auch zur Lenkung des Fahrzeuges, beispielsweise eines Raupenschleppers, verwenden lässt.

Diese Aufgabe wird gemäss der Erfindung durch folgende Merkmale gelöst:

a) Der Mitnehmer ist ein Verschwenkhebel, der unter Wirkung der Feder an dem Kolben anliegt;

b) in einem gemeinsamen Zylinder sind zwei gegensinnig arbeitende Kolben angeordnet, denen je ein Verschwenkhebel mit je einem Bremsgestänge für eine rechte und linke Bremse eines Fahrzeuges, vorzugsweise eines Raupenschleppers, zugeordnet sind;

c) das Bremgestänge weist ein Hebelsystem auf, an dem einerseits ein Gestänge von der Betriebsbremsbetätigung, z.B. vom Fussbremspedal, und andererseits ein Gestänge zur Betätigung der Bremse angelenkt sind, und das bei Druckabfall in seiner die Bremse beaufschlagenden Stellung blockiert ist bzw. in diese Stellung verschwenkt wird durch einen am Schwenkhebel sitzenden Anschlag;

d) Hebelsystem und Schwenkhebel sitzen jeweils auf einer gemeinsamen Zapfwelle und sind um letztere relativ gegeneinander verschwenkbar.

Das erfindungsgemässe Sicherheitssystem arbeitet unmittelbar auf das Hauptbremssystem, wobei es gleichgültig ist, ob das Hauptbremssystem hydraulisch oder mechanisch arbeitet. Das Drucksystem beaufschlagt lediglich den genannten Kolben, durch den bei vorschriftsmässigem Betriebsdruck der Verschwenkhebel mit seinem Anschlag in einer inaktiven Stellung gehalten wird, in der also der Bewegungsablauf der die Hauptbremse betätigenden Teile nicht gestört wird. Die Bremse lässt sich also in üblicher Weise betätigen und auch wieder lösen. Das aus dem Kolben mit seinem Verschwenkhebel bestehende Sicherheitssystem tritt erst dann in Aktion, wenn der Betriebsdruck in gefährlicher Weise absinkt. In diesem Fall wird der Verschwenkhebel mit seinem Anschlag in seine aktive Stellung verschwenkt, in der er entweder das sich sowieso in Bremsstellung befindliche Bremsgestänge in dieser Stellung blockiert, also ein Lösen der Bremse verhindert, oder aber das Hebelsystem des Bremsgestänges durch den genannten Anschlag, der dann als Mitnehmer fungiert, in die Bremsstellung verschwenkt und dort festhält.

Mit dem erfindungsgemässen Bremsgestänge lässt sich somit unabhängig voneinander entweder die rechte oder linke Fahrzeugbremse betätigen, während bei einem Abfall des Betriebsdruckkes beide Fahrzeugbremsen beaufschlagt werden. Ausserdem ist das neue Bremssystem hinsichtlich der beiden genannten Bremsen ausbalanciert, so dass ein Betriebsdruckabfall jeweils zu einer gleichmässigen Beaufschlagung beider Bremsen führt, so dass das derartig gebremste Fahrzeug in seiner Spur bleibt.

In der Zeichnung ist eine als Beispiel dienende Ausführungsform der Erfindung dargestellt. Es zeigen:

Figur 1 in schematischer Darstellung ein ausfallsicheres Bremsgestänge, dessen Sicherheitseinrichtung sich in inaktiver Stellung befindet;

Figur 2 die Darstellung gemäss Figur 1, bei der sich die Sicherheitseinrichtung in aktiver Stellung befindet und

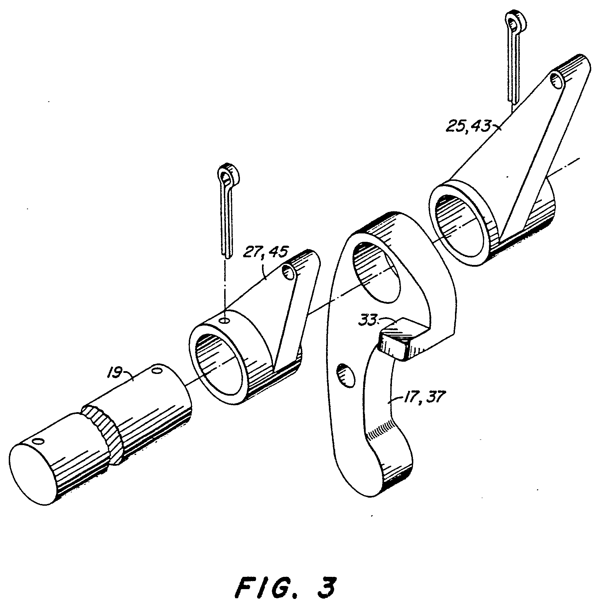

Figur 3 in einer Explosionsdarstellung und vergrössertem Massstab eine Hebelanordnung aus Figur 1 bzw. 2.

An einen Hydraulikzylinder 11 ist eine Hydraulikleitung 13 angeschlossen. In dem Hydraulikzylinder 11 sind ein erster und ein zweiter Zylinder 15, 16 angeordnet, die mit ihren inneren Enden jeweils jenseits des Anschlusses der genannten Hydraulikleitung 13 liegen und mit ihren anderen Enden bzw. mit ihren Kolbenstangen in entgegengesetzte Richtungen aus dem Hydraulikzylinder 11 ragen.

Gegen den Kolben 15 bzw. dessen Kolbenstange liegt das eine Ende eines ersten Verschwenkhebels 17 an, der frei drehbar auf einer Zapfwelle 19 gelagert ist, die ihrerseits drehbar in einem stationären Teil eines Fahrzeuges montiert ist. Der Verschwenkhebel 17 wird über eine Feder 21 in seine Anlagestellung gegen den Kolben 15 bzw. dessen Kolbenstange gezogen. Ein zweiter Hebel 25 sowie ein dritter Hebel 27 sind in paralleler Lage zueinander drehfest auf der Zapfwelle 19 festgelegt. An dem zweiten Hebel 25 sind eine Bremsenbetätigungsstange 29 und an dem dritten Hebel 27 eine zweite Bremsenbetätigungsstange 31 angelenkt.

Die erste Bremsenbetätigungsstange 29 steht in Verbindung mit einem nicht dargestellten Fussbremspedal, während die zweite Bremsenbetätigungsstange 31 mit dem ebenfalls nicht dargestellten Bremsbetätigungssystem verbunden ist, um das Bremssystem auf der einen Seite eines Fahrzeuges zu beaufschlagen.

Dem zweiten Kolben 16 ist ein entsprechendes System zugeordnet. Gegen seine Kolbenstange liegt das eine Ende eines Verschwenkhebels 37 an, der in diese Anlagestellung von der Feder 21 gezogen wird, die mit ihrem anderen Ende mit dem Verschwenkhebel 17 verbunden ist. Der Verschwenkhebel 37 ist frei drehbar auf einer Zapfwelle 39 gelagert, auf der drehfest zwei Parallelhebel 43, 45 sitzen, die den Hebeln 25, 27 entsprechen. An dem Hebel 43 sind eine Bremsbetätigungsstange 47 und an dem Hebel 45 eine Bremsbetätigungsstange 49 angelenkt. Auch hier steht die Bremsbetätigungsstange 47 mit einem nicht dargestellten Fussbremspedal in Verbindung, während die Bremsbetätigungsstange 49 mit dem ebenfalls nicht dargestellten eigentlichen Bremssystem verbunden ist, das die Bremsen auf der anderen Seite des Fahrzeuges beaufschlagt.

Die beiden Verschwenkarme 17, 37 weisen jeweils einen Anschlag oder Mitnehmer 33 auf, der sich in der aktiven Stellung der Verschwenkhebel an den benachbarten Hebel 27 bzw. 45 anlegt.

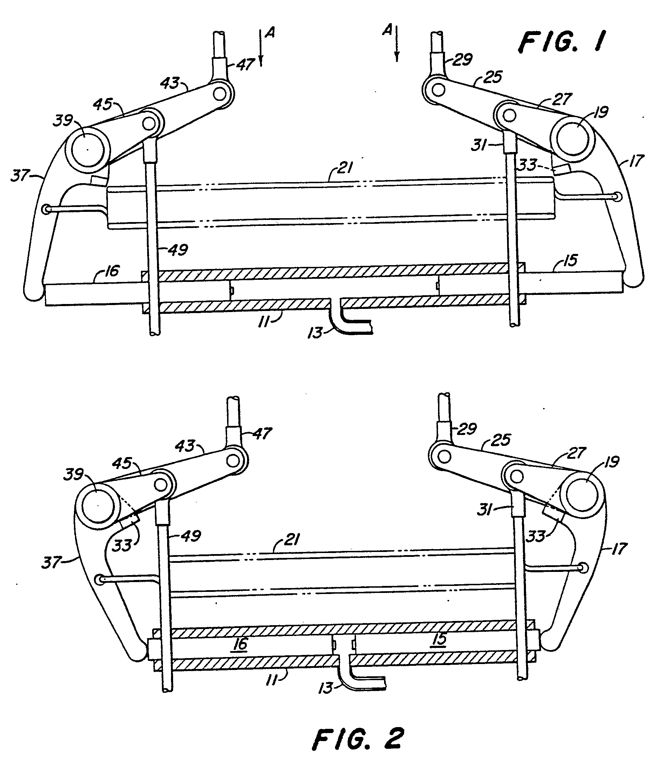

Die dargestellte Ausführungsform ist insbesondere geeignet für Fahrzeuge, die über ihr Bremssystem gelenkt werden, insbesondere für Raupenschlepper. Dabei zeigt Figur 1 die Verschwenkhebel 17, 37 in ihrer inaktiven Stellung, in der also die Anschläge 33 nicht an den Hebeln 27, 45 anliegen. Das eigentliche Bremsgestänge 25, 27, 29, 31 bzw. 43, 45, 47, 49 befindet sich in Bremsstellung; auf beiden Seiten des Fahrzeuges sind also die Bremsen angezogen. Zum Lösen dieser Fahrzeugbremsen müssten die Bremsbetätigungsstangen 29, 47 in Richtung der Pfeile A in Figur 1 verschoben werden.

Sinkt nun der Betriebsdruck im Hydrauliksystem ab, ergibt sich ein entsprechender Druckabfall auch in der Hydraulikleitung 13 und damit im Hydraulikzylinder 11. Dadurch überwiegt nun die von der Feder 21 auf die beiden Verschwenkhebel 17, 37 ausgeübte Zugkraft, so dass die genannten Verschwenkhebel gemäss Figur 2 gegeneinander nach innen verschwenkt werden und dabei die beiden Kolben 15, 16 in den Hydraulikzylinder 11 einschieben. Infolge der Verschwenkung der beiden Verschwenkhebel 17, 37 legen sich deren Anschläge 33 von unten gegen den jeweils benachbarten Hebel 27 bzw. 45 an und halten diese dadurch in ihrer Bremsstellung.

Vorstehenden Erläuterungen entnimmt ein Durchschnittsfachmann zahlreiche Möglichkeiten für Modifikationen und Abwandlungen, die durch die Erfindung erfasst sein sollen.

**Patentanspruch**

1. Bremsgestänge für ein Fahrzeug mit hydraulischem oder pneumatischem Drucksystem, bei dem ein unter Betriebsdruck stehender Kolben (15) einen Mitnehmer gegen die Wirkung einer Feder (21) in einer die Bremse nicht beaufschlagenden Freigabestellung hält, während bei Druckabfall im Drucksystem der Kolben (15) unter Wirkung der genannten Feder (21) verschoben und der Mitnehmer dadurch in eine die Bremse beaufschlagende Bremsstellung bewegt werden, wobei der Mitnehmer nur in seiner Bremsverstellrichtung mit dem Bremsgestänge (25, 27, 29, 31) in Eingriff steht, es in seine Bremsstellung verschwenkt und hier blockiert, während der Mitnehmer in seiner Freigabestellung mit dem Bremsgestänge (25, 27, 29, 31) ausser Eingriff steht, so dass das Bremsgestänge (25, 27, 29, 31) bei normalem Druck im Drucksystem nur von der Betriebsbremsbetätigung verschwenkt werden kann, gekennzeichnet durch folgende Merkmale:

a) Der Mitnehmer ist ein Verschwenkhebel (17), der unter Wirkung der Feder (21) an dem Kolben (15) anliegt;

b) in einem gemeinsamen Zylinder (11) sind zwei gegensinnig arbeitende Kolben (15; 16) angeordnet, denen je ein Verschwenkhebel (17; 37) mit je einem Bremsgestänge (25, 27, 29, 31; 43, 45, 47, 49) für eine rechte und linke Bremse eines Fahrzeuges, vorzugsweise eines Raupenschleppers, zugeordnet sind;

c) das Bremsgestänge weist ein Hebelsystem (25, 27; 43, 45) auf, an dem einerseits ein Gestänge (29; 47) von der Betriebsbremsbetätigung, z.B. vom Fussbremspedal, und andererseits ein Gestänge (31; 49) zur Betätigung der Bremse angelenkt sind, und das bei Druckabfall in seiner die Bremse beaufschlagenden Stellung blockiert ist bzw. in diese Stellung verschwenkt wird durch einen am Schwenkhebel (17; 37) sitzenden Anschlag (33);

d) Hebelsystem (25, 27 bzw. 43, 45) und Schwenkhebel (17 bzw. 37) sitzen jeweils auf einer gemeinsamen Zapfwelle (19 bzw. 39) und sind um letztere relativ gegeneinander verschwenkbar.

**Revendication**

1. Timonerie de frein pour véhicule équipé d'un système sous pression hydraulique ou pneumatique, dans laquelle un piston (15) soumis à la pression de service maintient un élément d'entraînement, en antagonisme à l'action d'un ressort (21), dans une position de dégagement n'agissant pas sur les freins, tandis qu'en cas de chute de pression dans le système sous pression, le piston (15) est déplacé sous l'action du ressort précité (21) et l'élément d'entraînement est amené de cette façon dans une position de serrage du frein, l'élément d'actionnement n'étant en prise avec la timonerie de frein (25, 27, 29, 31) que dans sa direction de déplacement ou de serrage du frein, en la faisant pivoter jusque dans la position de freinage et en la bloquant dans cette position, tandis que l'élément d'entraînement n'est pas en prise, dans sa position de dégagement, avec la timonerie de frein (25, 27, 29, 31), de sorte que cette timonerie de frein (25, 27, 29, 31) ne peut être déplacée par pivotement que par le système d'actionnement des freins de service en cas de pression normale dans le système sous pression, caractérisée par les particularités suivantes:

a) l'élément d'entraînement est constitué par un levier pivotant (17) qui s'applique contre le piston (15) sous l'action du ressort (21);

b) deux pistons (15; 16) travaillant en sens opposés sont disposés dans un cylindre commun (11), un levier pivotant (17; 37) prévu pour une timonerie de frein (25, 27, 29, 31; 43, 45, 47, 49) destinée à un frein droit et à un frein gauche d'un véhicule, de préférence d'un tracteur à chenilles, étant conjugué chaque fois à un de ces pistons;

c) la timonerie de frein présente un système de leviers (25, 27; 43, 45) auquel est articulée d'une part une timonerie (29; 47) du système d'actionnement des freins de service, par exemple de la pédale de frein, et d'autre part une timonerie (31; 49) pour l'actionnement du frein, et qui en cas de chute de pression est bloqué dans sa position de serrage du frein, ou bien est amené par basculement dans cette position au moyen d'une butée (33) montée sur le levier pivotant (17; 37);

d) le système de leviers (25, 27 ou 43, 45) et le levier pivotant (17 ou 37) sont montés chaque fois sur un bout d'arbre commun (19 ou 39) et peuvent pivoter l'un par rapport à l'autre autour de ce dernier.

## Claim

A brake linkage for a vehicle with hydraulic or pneumatic pressure system, a cylinder rod (15) holds under working pressure a cam against a biasing means (21) in a brake non-activating release position, but is shifted by said biasing means (21) when there is a pressure decrease and, consequently, moves said cam in a brake activating position, whereby said cam acts on the brake actuation means (25, 27, 29, 31) only in its brake shifting direction, thereby pivoting said brake actuation means (25, 27, 29, 31) in its brake activating position and locking it in this position, whereas said cam in its release position is out of contact with said brake actuation means (25, 27, 29, 31) so that under normal pressure in the pressure system said brake actuation means (25, 27, 29, 31) can be only pivoted by working brake operation, characterized by the following features:

a) said cam is a rocking lever (17) biased (21) against and abutting said cylinder rod (15);

b) in a common cylinder (11) two cylinder rods (15; 16) are arranged extendable in opposite directions, each being assigned to a rocking lever (17; 37) with brake actuation means (25, 27, 29, 31; 43, 45, 47, 49) respectively, to actuate a right and left side brake of a vehicle, especially of a crawler-tractor;

c) said brake actuation means comprises a lever system (25, 27; 43, 45) which is locked in its brake activating position or is pivoted into this position by a stop member (33) fixed to said rocking lever (17; 37)m whereby rods (29; 47) from said working brake operation, for example from a brake pedal, as well as rods (31; 49) for activating the brake are pivotally mounted to said lever system (25, 27; 43, 45); and

d) lever system (25, 27 or 43, 45) and rocking lever (17 or 37) are mounted on a common shaft (19 or 39) being rotatable around said shaft relative to each other.

0 044 523

FIG. 1

FIG. 2

**FIG. 3**